Europäisches Patentamt

European Patent Office

Office européen des brevets

(11) Publication number: **0 341 362**
**A2**

## (12) EUROPEAN PATENT APPLICATION

(21) Application number: 88309054.0

(51) Int. Cl.4: **G11B 5/55 , G11B 5/596**

(22) Date of filing: 29.09.88

(30) Priority: 10.05.88 JP 111465/88

(43) Date of publication of application:
15.11.89 Bulletin 89/46

(84) Designated Contracting States:
DE FR GB

(71) Applicant: **MITSUBISHI DENKI KABUSHIKI KAISHA**
**2-3, Marunouchi 2-chome Chiyoda-ku**
**Tokyo 100(JP)**

(72) Inventor: **Yasui, Takayoshi Itami Seisakusho**
**Mitsubishi**
**Denki 1-1, Tsukaguchi Hon-machi 8-chome**
**Amagasaki City Hyogo Prefecture(JP)**

(74) Representative: **Hackett, Sean James et al**
**Marks & Clerk 57-60 Lincoln's Inn Fields**
**London WC2A 3LS(GB)**

(54) Magnetic disc apparatus.

(57) A magnetic disc apparatus comprises a positioning assembly (22) for positioning magnetic heads (17,18,19,20) relative to magnetic discs (13,14) by moving the magnetic heads of a magnetic head drive Unit (21) in response to a pair of positioning servo-information (27,28) which is disposed on the stacked magnetic discs, and the pair of positioning servo-information to be read by the magnetic heads comprises pieces of servo-information on the magnetic discs that are axially spaced apart from each other.

# FIG. 5

# MAGNETIC DISC APPARATUS

## BACKGROUND OF THE INVENTION

This invention relates to a magnetic disc apparatus, and more particularly to a magnetic disc apparatus for positioning magnetic heads with respect to magnetic discs by servo-signal from servo-information recorded on a portion of data-recording magnetic discs.

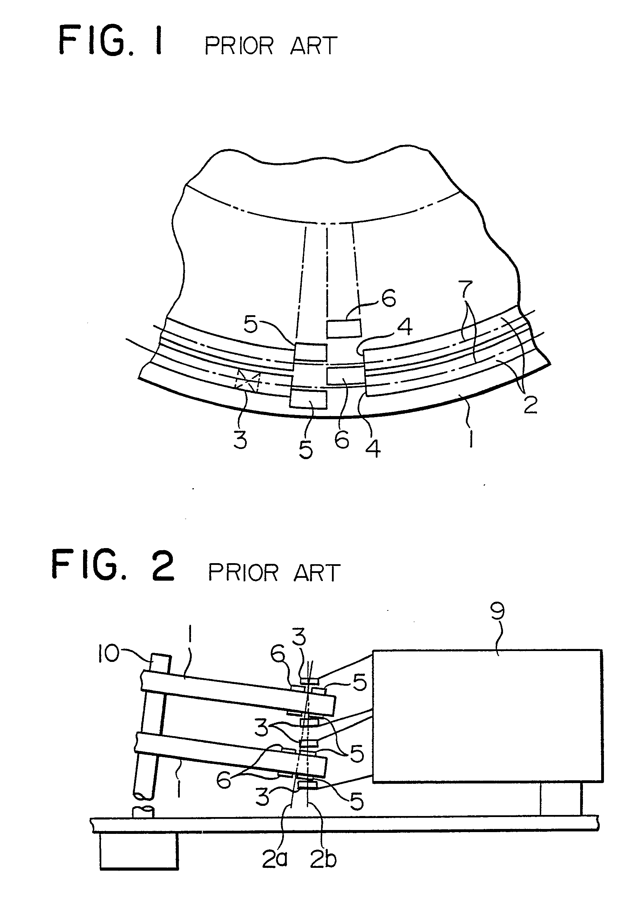

In Fig. 1, a magnetic disc 1 disclosed in U. S. Patent No. 4,396,959 is shown in which positioning servo-information for positioning a position control system is recorded. Fig. 2 is a schematic side view for explaining the positional change of the magnetic head relative to the magnetic disc 1. In Figs. 1 and 2, the magnetic discs 1 are supported by a rotary shaft 10 and each provided with data recording and reproducing tracks 2 for various data. Recording and reproducing relative to the tracks 2 are achieved by recording and reproducing magnetic heads 3 (see also Fig. 2). The magnetic heads 3 are supported by a magnetic head drive means 9.

Each track 2 is provided with a cut-out portion 4, within which a first and a second servo-information 5 and 6 are disposed. The first and the second servo-information 5 and 6 are positioned in a circumferentially staggered position at the opposite sides of the center line 7 of the track 2, thereby constituting a pair of servo-information for positioning. The widths (dimension in the radial direction) of each servo-information 5 and 6 are substantially equal to that of the track 2. Therefore, within a width dimension of the outer-most track 2 on the magnetic disc 2, there are the inner half of the first servo-information 5 as well as the outer half of the second servo- information 6, meaning that a magnetic head 3 over the first track 2 bridges two servo-information 5 and 6. Similarly, for the second track 2 which is the second from the outside, the second and the third servo-information 6 and 8 are disposed in pair on the opposite sides of the center line 7, and likewise each track is provided with a pair of servo-information.

As best shown in Fig. 2, such servo-information is similarly disposed on both sides of the magnetic disc 1, and the magnetic tracks 2 are also disposed on both sides of the magnetic disc 1. Therefore, a magnetic head 3 is provided for each side of each disc 1, so that there are four magnetic heads 3 in the illustrated example in which there are two magnetic discs 1.

In the magnetic disc apparatus thus constructed, when a magnetic head 3 passes above a pair of servo-information 5 and 6 on a magnetic disc 1, the respective servo-information 5 and 6 is electromagnetically converted into a voltage signal which is a servo signal. These voltage signals are provided into an operational circuit of a magnetic head drive assembly 9, where they are compared with each other to obtain an error signal. The error signal is used to drive the magnetic head drive assembly 9, and the magnetic heads 4 are moved by the magnetic head drive assembly 9 until the voltage signals from the magnetic head 3 become equal to each other.

Therefore, when the first magnetic head 3, that is the upper-most magnetic head out of four magnetic heads 3, for example, is utilized for carrying out the positioning of the magnetic heads 3 and the tracks 2 on the upper-most magnetic disc 1, the positioning not only of the magnetic head 3 that was utilized in positioning but also of other magnetic heads 3 with respect to the magnetic disc 1 can be achieved with high reproducability.

However, as discussed above, after positioning of the magnetic heads 3 relative to the track 2 on the upper-most magnetic disc 1 is carried out by utilizing the first magnetic head 3, that is the upper-most magnetic head of four magnetic heads 3, for example, change in environmental conditions particularly temperature changes may cause the rotary shaft 10 of the magnetic disc 1 to tilt to vary the positional relationship between the magnetic heads 3 and the magnetic disc 1. Under these circumstances, the positional relationship of the upper-most magnetic head 3 and the magnetic disc 1 that are utilized for positioning can be accurately reproduced as understood from the fact that the center line 2a passing thorugh the center of each track 2 and the center line 2b passing through the centers of the respective tracks 2 cross each other as shown in Fig. 2. However, as for the other sets of magnetic heads 3 and the magnetic disc 1, as understood from the fact that the center line 2a and the center line 2b are not in coincidence, positional displacements remain in these sets. In particular, the positional displacement between the lower-most magnetic head 3 and magnetic disc 1 becomes very large, sometimes making a proper recording and reproduction impossible.

Also, in other situations, a set of magnetic head and magnetic disc different from the set of the upper-most magnetic head 3 and the magnetic disc 1 utilized for positioning may be selected for use in the recording and reproducing. Under such circumstances, when it is tried to reposition the newly selected magnetic head 3, the magnetic head 3 moves during the recording and reproducing of the data due to the delay in operation due to the response time of the magnetic head drive unit 9, posing a problem that the recording and reproducing cannot be achieved accurately.

## SUMMARY OF THE INVENTION

Accordingly, an object of the present invention is to provide a magnetic disc apparatus in which, even when the rotary shaft of the magnetic disc apparatus tilts relative to the magnetic head drive unit, the positioning can be precisely reproduced so that no positional displacement is provided between the magnetic heads and the magnetic discs.

With the above object in view, the magnetic disc apparatus of the present invention comprises a positioning assembly for positioning magnetic heads relative to magnetic discs by moving the magnetic heads of a magnetic head drive unit in response to a pair of positioning servo-information which is disposed on the stacked magnetic discs, and the pair of servo-information to be read by the magnetic heads comprises pieces of servo-information on the magnetic discs that are spaced apart from each other.

According to the magnetic disc apparatus of the present invention, servo-information disposed on magnetic discs that are spaced from each other in a stack of magnetic discs is used as the pair of positioning servo-information. Therefore, the positioning of the magnetic heads is achieved about these two points with these two sufficiently spaced apart points as references, and even when the rotary shaft of the magnetic disc drive apparatus tilts, the positional displacement is relatively small.

## BRIEF DESCRIPTION OF THE DRAWINGS

The present invention will become more readily apparent from the following detailed description of the preferred embodiment taken in conjunction with the accompanying drawings, in which:

Fig. 1 is a schematic side view of the magnetic disc apparatus of the conventional design illustrating the positioning servo-information on the magnetic disc;

Fig. 2 is a schematic side view of the magnetic disc drive unit and the magnetic discs of the deformed magnetic disc apparatus of Fig. 1;

Fig. 3 is a schematic plan view of the magnetic disc apparatus of the present invention illustrating the positioning servo-information on the magnetic disc;

Fig. 4 is a schematic side view of the magnetic disc apparatus of Fig. 1 illustrating the relationship between the magnetic disc drive unit and the magnetic discs; and

Fig. 5 is a schematic side view of the magnetic disc apparatus shown in Fig. 4 but illustrating when it is deformed.

## DESCRIPTION OF THE PREFERRED EMBODIMENT

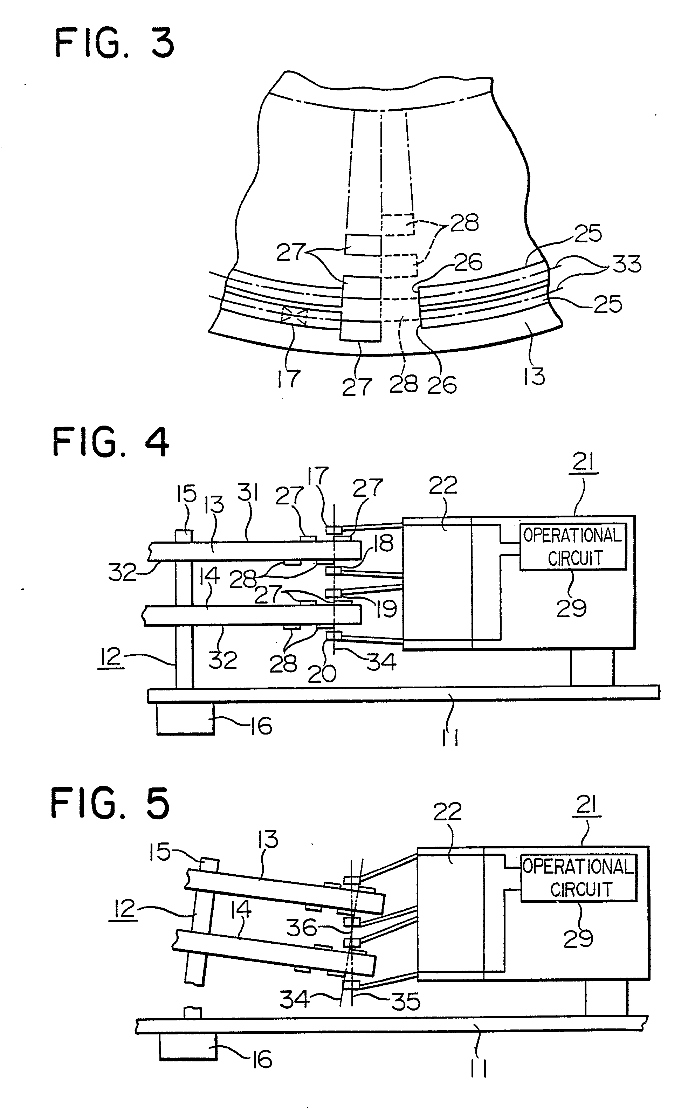

The magnetic disc apparatus of the present invention shown in Figs. 3 to 5 comprises a base 11 and a magnetic disc drive means 12 mounted on the base 11. The magnetic disc drive means 12 supports a plurality of (two in the illustrated example) magnetic discs 13 and 14 on a common rotary shaft 15 to rotate them by a drive unit 16. Also, in order to perform magnetic recording and reproduction with respect to the magnetic discs 13 and 14 on the magnetic disc drive means 12, a magnetic head drive means 21 carrying magnetic heads 17, 18, 19 and 20 is also mounted on the base 11. The magnetic disc apparatus also comprises a positioning means 22 which achieves positioning of the magnetic heads 17 to 20 relative to the magnetic discs 13 and 14 by moving the magnetic head drive means 21 in response to servo-information which are read by the magnetic heads 17 to 20 from the magnetic discs 13 and 14.

In the magnetic disc apparatus of the present invention shown in Figs. 3 to 5, the magnetic discs 13 and 14 (only the magnetic disc 13 is shown in Fig. 3) are provided with a plurality of data recording and reproducing tracks 25. Each track 25 is recorded and reproduced by the magnetic heads 17 to 20 of the data recording and reproducing magnetic head drive means 21.

Each track 25 is provided with a cut-out portion 26, within which a first and a second servo-information 27 and 28 are disposed. The first servo-information 27 is disposed on a first surface 31 (the upper surface in the figure) of the magnetic disc 13, and the second servo-information 28 is disposed on a second surface 32 (the lower surface in the figure) of the magnetic disc 13, and the positional relationship in plan is as shown in Fig. 3 in which they are arranged circumferentially staggered on both sides of the center line 33 of the track 25. The width (radial dimension) of each servo-information 27 and 28 is substantially equal to the width of the track 25. Therefore, the inner half of the first servo-information 27 falls within the width dimension (radial dimension) of the outer-most track 25 on the first surface 31 of the magnetic disc 13. Also, the outer half of the second servo-information 28 falls within the width dimension (radial dimension) of the outer-most track 25 on the second surface 32 of the magnetic disc 13. Thus, the magnetic head 17 on the track 25 on the first surface 31 of the magnetic disc 13 electromagnetically converts the first servo-information 27 to provide a voltage amplitude signal, and the magnetic head 18 on the track 25 on the second surface 32 of the magnetic disc 13 electromagnetically converts the second servo-information 28 to provide another voltage amplitude signal. The arrangement is made such that these relationships between the magnetic heads 17 and 18 and the magnetic disc 13 are held also as to the plurality of magnetic discs, respectively. In the illustrated example, the above relationship is held with respect to the magnetic heads 19 and 20 and the magnetic disc 14.

According to the present invention, the first and the second servo-information 27 and 28 for use in positioning are a set of two pieces of servo-information located at spaced-apart positions. Thus, in order to obtain the respective voltage amplitude signals from two servo-information 27 and 28 located at the spaced-apart positions, two magnetic heads located at the spaced-apart positions are selected from the magnetic heads 17 to 20 and are used in a pair. In a preferred embodiment, the first voltage amplitude signal is obtained from the first servo-information 27 on the first surface 31 of the first magnetic disc 13 by the first magnetic head 17 (the first head from the top in Fig. 4), and the second voltage amplitude signal is obtained from the second servo-information 28 on the second surface 32 of the second magnetic disc 14 by the fourth magneitc head 20 (the fourth head from the top in Fig. 4) which is the remotest from the first magnetic head 17.

With the magnetic disc apparatus thus constructed, when the first magnetic head 17 passes over the first servo-information 27 on the first magnetic disc 13, the first servo-information is electromagnetically converted into a first voltage amplitude signal which is a servo signal. Also, when the fourth magnetic head 20 passes above the second servo-information 28 on the second magnetic disc 14, the second servo-information 28 is electromagnetically converted into a second voltage amplitude signal. These voltage signals are supplied to an operating circuit 29 of the magnetic disc apparatus, where they are compared to provide an error signal. The error signal is supplied to a positioning means 22 of the magnetic head drive means 21 to be used to move the magnetic head drive means 21 until two voltage amplitude signals from the magnetic heads 17 and 20 become equal to each other. Such an operating circuit 29 may be any conventional circuit such as disclosed in U.S. Patent No. 4,396,959.

When the first magnetic head 17 and the fourth magnetic head 20 most remote from the first magnetic head 17 out of the four magnetic heads 17 to 20 are employed to achieve positioning of the magnetic heads 17 to 20 relative to the magnetic discs 13 and 14, the positioning of not only magnetic heads 17 and 20 employed in the original positioning, but also of the remaining magnetic heads 18 and 19 relative to the magnetic discs 13 and 14 can be realized with high reproduceability.

Also, after the above-described positioning has been effected, changes in environmental conditions, particularly temperature changes, may cause the rotary shaft 15 of the magnetic discs 13 and 14 to tilt to vary the positional relationship between the magnetic discs 13 and 14 and the magnetic heads 17 to 20. Even in such circumstances, since the magnetic heads employed in positioning are the upper-most, first magnetic head 17 and the lowermost, fourth magnetic head 20, when the voltage smplitude signals obtained from these magnetic heads 17 and 20 are equal to each other, it is determined that the positioning has been prcisely achieved. At this time, if it is assumed that the rotary shaft 15 of the magnetic disc drive means 12 tilts as shown in Fig. 3, then the first magnetic head 17 only partly opposes the first servo-information 27 and the fourth magnetic head 20 also only partly opposes the second servo-information 28 on the second magnetic disc 14. In other words, the first and the fourth magnetic heads 17 and 20 are positioned at slightly shifted positions relative to the tracks 25 to which the magnetic heads are to oppose, causing the center line passing through the centers of the tracks 25 of the magnetic discs 13 and 14 and the center line passing through the centers of the magnetic heads 17 to 20 to be not coincident.

However, as to the positional relationship of the second and the third magnetic heads 18 and 19, which are heads between the first and the fourth magnetic heads 17 and 20, to the respective magnetic discs 13 and 14, the positional displacements are much less than the positional relationships of the above-discussed first and the fourth magnetic heads 17 and 20. This is because, since the positioning is achieved through the use of the first and the fourth magnetic heads 17 and 20 which are apart from each other, when the rotary shaft 15 tilts as shown in Fig. 3, the positioning is achieved about center point 36 at which the center lines 34 and 35 cross each other and which is the mid-point between the first and the fourth magnetic heads 17 and 20. Therefore, in the conventional design shown in Fig. 2, the positioning error of the first magnetic head 3 is zero, and the positioning errors of the second magnetic head and the third magnetic head increase in proportion to the distance from the first magnetic head, and the positioning error of the fourth magnetic head 3 is the greatest. In the magnetic disc apparatus of the present invention shown in Fig. 5, if it is assumed that the rotary shaft 15 tilts the same angle as in the above discussion, maximum positioning error is only one half of the maximum error of the conventional design since the distance between the crossing point and the remotest magnetic head is one half of the conventional design.

Under certain conditions, a set of the magnetic head and the magnetic disc different from the set of the magnetic head 17 and 20 and the magnetic disc 13 and 14 is selected for recording and/or reproducing by a head select signal from an unillustrated higher level device. In such cases, since the amount of the positioning error is only one half of that of the conventional design, the amount of movement of the magnetic heads 17 to 20 necessary for repositioning the newly selected magnetic head can be small, increasing the preciseness of the recording and/or reproducing.

According to the present invention, the magnetic disc apparatus comprises a positioning assembly for positioning magnetic heads relative to magnetic discs by moving the magnetic heads of a magnetic head drive unit in response to a pair of positioning servo-information which is disposed on the stacked magnetic discs, and the pair of servo-information to be read by the magnetic heads comprises pieces of servo-information on the magnetic discs that are spaced apart from each other. Therefore, the positioning of the magnetic heads is achieved with reference to two points sufficiently spaced apart from each other, and even when the rotating axis fo the magnetic disc drive apparatus tilts, the positional displacement is relatively small.

## Claims

1. A disk drive apparatus comprising a disc drive means (16) for supporting a plurality of discs (13,14) in overlapping relationship, each disc having servo-information (27,28) thereon, a plurality of heads (19 to 20) for recording and/or reproducing with respect to the discs, and positioning means (22) for positioning the heads in response to the sevo-information read by the heads, characterised in that the servo-information read by the heads for positioning thereof comprises pieces of servo-information derived from at least two locations which are in spaced apart places, which places are substantially parallel to the recording/reproducing surfaces of the discs.

2. A magnetic disc apparatus comprising:
a base;
magnetic disc drive means mounted on said base for supporting at least two magnetic discs on a common rotary shaft in an overlapping relationship, each magnetic disc having at least one pair of servo-information thereon;

magnetic head drive means mounted on said base and having a plurality of magnetic heads for magnetically recording and reproducing with respect to said magnetic discs on said magnetic disc drive means; and

positioning means for positioning said magnetic heads relative to said magnetic discs by moving said magnetic heads of said magnetic head drive means in response to a pair of servo-information which is on said magnetic discs and read by said magnetic heads;

said pair of servo-information to be read by said magnetic heads for positioning comprises pieces of servo-information on said magnetic discs that are spaced apart from each other in the axial direction.

3. A magnetic disc apparatus as claimed in claim 2, wherein said pair of servo-information for positioning comprises pieces of servo-information that are disposed on the opposite sides of said magnetic disc.

4. A magnetic disc apparatus as claimed in claim 2, wherein said pair of servo-information for positioning comprises pieces of servo-information on said magnetic discs that are remotest from each other.

5. A magnetic disc apparatus as claimed in claim 3, wherein said pair of servo-information for positioning comprises pieces of servo-information on said magnetic discs that are remotest from each other.

6. A magnetic disc apparatus substantially as hereinbefore described with reference to Figures 3 to 5 of the accompanying drawings.

# FIG. 1  PRIOR ART

# FIG. 2  PRIOR ART

# FIG. 3

# FIG. 4

OPERATIONAL CIRCUIT

# FIG. 5

OPERATIONAL CIRCUIT